# EUROPEAN PATENT SPECIFICATION

(11) **EP 1 064 815 B1**
(45) Date of publication and mention of the grant of the patent: **12.05.2010**
(21) Application number: 99914852.1
(22) Date of filing: 23.03.1999
(51) Int. Cl.: H04W 48/18

(54) **ADAPTABLE SELECTION OF CARRIER SERVICES**
ANPASSBARE SELEKTION VON TRÄGERDIENSTEN
SELECTION ADAPTABLE DE SERVICES D'OPERATEURS

(30) Priority: 24.03.1998 SE 9800978
(43) Date of publication of application: 03.01.2001
(73) Proprietor: TELIASONERA AB, 106 63 Stockholm (SE)
(72) Inventor: MAGNUSSON, Peter, S-653 42 Karlstad (SE); SCHMIDT, Mikael, S-654 68 Karlstad (SE)
(74) Representative: Hopfgarten, Nils
(86) International application number: PCT/SE1999/000451
(87) International publication number: WO 1999/049690

(56) References cited:
- GB-A- 2 292 047
- GB-A- 2 294 844

## Description

### Field of the invention

The present invention relates to a method at a cellular mobile telephone system including at least one network with at least one base station and at least one mobile terminal.

### Background of the invention

The mobile telephone networks of today have normally no control over which carrier service the mobile user selects to utilise. This is a problem both to the mobile user and to the network operator. The mobile operator competes about too scarce resources and runs the risk of getting a quality which is experienced as poor, in spite of that there are perhaps other resources in the network which might be used. The network operator has no mechanism to allocate users over different carrier services and cannot optimally utilise his/her network resources, but is obliged to accept the behaviour of the mobile equipment.

In GB 2 294 844 a common communications system is described, which provides information regarding the availability of other communication systems within the common communications system coverage area to a subscriber unit. The subscriber unit then selects one of the communications systems and receives enabling programming from the communications system. The enabling programming permits the subscriber unit to configure itself to operate on the selected communications system.

GB 2 292 047 discloses a mobile station operable on a plurality of communications systems. The mobile station is then loaded with software modules to implement service specific and feature specific software for each of a plurality of service networks, and the appropriate software modules are activated in response to an identification module which identifies which network the mobile is to operate on.

The problem of the mobile telephone networks of today is that the mobile user often has to utilise one in advance defined carrier service, in spite of the fact that the mobile user might have considerably larger network resources from the network operator if he/she had utilised any other carrier service.

The aim of the present invention is to solve this problem in a simple and practical way.

### Summary of the invention

This above mentioned aim is achieved by a method at a cellular mobile telephone system which includes at least one network with at least one base station and at least one mobile terminal, wherein the base station transmits information to the mobile terminal regarding load in and qualities of the network, and a decision about which carrier service that shall be used for communication between the network and the mobile terminal is made by the mobile terminal on basis of the from the stored information transmitted by the base station which method is characterized by the features of the characterizing portion of claim 1.

A simple and practical way of transmitting network information from the base station to the mobile terminal is thus by means of Cell Broadcast.

An advantage of the invention is that the mobile terminal utilises the carrier service, for instance HSCSD, GPRS, which is most suited for requested application, respective load in the network.

An advantageous embodiment is described in the patent claim 3, according to which the network qualities can be stored on a SIM-card.

Further characteristics of the invention are given in the other subclaims.

### Brief description of the drawings

In the following a detailed description of the invention is given with reference to the enclosed figures in which:
Figure 1 shows the included components in the cellular mobile telephone system according to the invention.
Figure 2 shows a flow chart according to the invention which describes the function of the mobile terminal.
   A: Start
   B: Wait
   C: Listen for information on the Cell Broadcast Channel.
   D: New Information ?
   E: Store the information on the SIM-card.
   F: Wait
   G: Call from the application on the external Computer.
   H: Call an application on the SIM-card.
   I: Establish suitable carrier.
   J: Wait for data from the application.
   K: Receive data from the application.
   L: Transmit data from the application.
   M: Data finished ?
   N: Disconnect
   O: Wait

### Detailed description of an embodiment of the invention

In the GSM-systems of today there are a number of carrier services to select from where one is to establish a data call. One can for instance select between a transparent (transmission of data without retransmission at error), or a non-transparent transmission (transmission of data with retransmission at error) carrier service depending on which type of behaviour one wants of the GSM carrier service. In most cases, however, the customer who uses the carrier service does not know that there is a choice to be made, and neither should he/she need to care about this. At present there also are few PCMCIA-cards which support all types of carrier services. For most the non-transparent, asynchronous service functions quite enough well. Within the next four to five years period of time, new carrier services probably will be introduced in Telia Mobile's network. First out is HSCSD (High Speed Circuit Switched Data) which will offer an increased data rate to the mobile data services. Just as the name indicates, this is a circuit switched service where one as user reserves a radio channel for as long as one is connected, irrespective of if one uses the channel or not. In a few years there will be another new carrier service: GPRS (General Packet Radio Service). This is a packet switched service where one only uses the radio channel when one needs it, and where a multiple of user can share the radio resources.

A packet switched carrier service such as GPSR is well suited for traffic which has a quality of being "burst-like", i.e. where the information is coming in short bursts with comparatively long intervals, whereas HSCSD is better suited for traffic, the quality of which is continuous and then is finished, for instance a file transmission. In some cases it can be easy to in advance know what the traffic model looks like, for instance in a taxi firm which uses GSM data services for communication between the exchange and the cars, each car generates a lot of short messages with comparatively long intervals. This is a consequence of the application which the taxi firm uses, and in this example GPRS consequently should be selected as carrier service. It is probably easier to connect a traffic model to a vertical application, which is produced for a specific purpose, than to make the same connection for horizontal applications, for instance Internet browsers, which can be used for a lot of different purposes. To the above mentioned carrier services can be added SMS and USSD, which are suited for quite different applications and services.

The problem is to know how to select right carrier service with regard to traffic model which in its turn is influenced by how the application is designed and how the customer uses this application.

What further complicates the matter is that the optimal selection of carrier service also is influenced by how the resources in the network are allocated and how they are loaded. In the GSM-systems of the future, the different carriers services probably will share the total number of resources, for instance will one resource which on one occasion is reserved for HSCSD to, on another occasion, be reserved for GPRS. The network will be able to dynamically allocate and re-allocate its total resources between different carrier services. How fast this dynamics will be is however not yet evident. On a specific occasion the optimal selection of carrier service for a given traffic model will be, say GPRS. On another occasion the optimal selection of carrier service for the same traffic model will instead be HSCSD. The reason for this may be that the GPRS-resources are so strained that it is a better selection to have guaranteed resources in the form of HSCSD. Further complications will occur when UMTS is introduced. In many areas we will have coverage for both UMTS and GSM, and combined dual-mode terminals which will be able to operate in both systems.

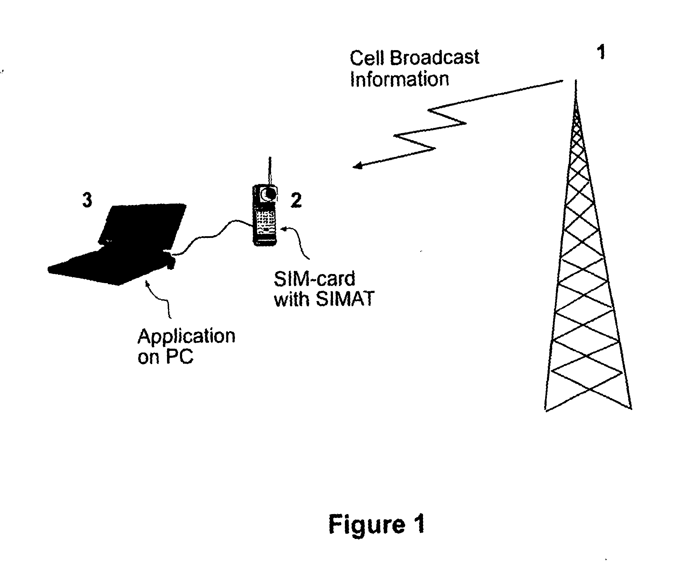

Figure 1 shows a mobile telephone system according to the invention, where the antenna (1) represents the base station which transmits recommendations (Cell Broadcast Information) to the mobile terminal (2). The mobile terminal (2) in Figure 1 utilises SIM-card with SIMAT (SIM Application Toolkit) and is connected to a portable computer (3) (for instance PC) via an interface card, for instance PCMCIA-card.

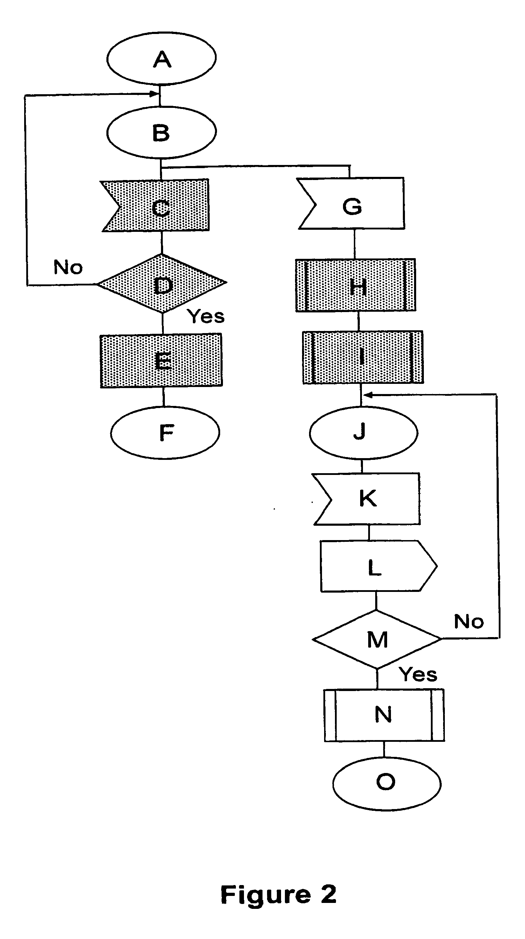

The network which is controlled by the base station 1 can recommend which carrier services that can be used optimally on each given occasion, but the actual decision is always taken by the mobile equipment 2,3. The invention is based on SMSCB (SMS over Cell Broadcast) and SIMAT (SIM Application Toolkit). At Cell Broadcast, the information can be transmitted to all mobiles 2 in one or more cells. The information is transmitted in form of an SMSCB and can be shown on the display and/or stored on the SIM-card. This invention is based on that the information which is transmitted on Cell Broadcast is received by the mobile terminal 2 and is stored on the SIM-card. This information includes information about the momentary allocation of resources of the network and loading locally for just that cell where the information has been received. When the user of the mobile terminal 2 shall start an application which requires a data connection, a request is made to the SIM-card which can recommend a carrier service which is an optimal choice with regard to selected application and resource allocation and loading in the network. For making the SIM-card able to give such a recommendation is required that there is one for the purpose intended software stored on the card. This software is specific to the operator and can be downloaded on the card either in connection with that the card is being bound to a person, or via an SMS. It should be understood that this software also can be stored in just any memory in the mobile terminal 2, or in the computer 3. An SMS can be transmitted directly to a user, or to a group of users, by means of Cell Broadcast. Figure 2 below describes in a flow chart how a mobile terminal 2 which makes use of the described technology can operate. Figure 2 implies that above mentioned software already exist on the SIM-card.

The shaded boxes in the flow chart in Figure 2 represent the invention. The mobile terminal 2 is initially in the wait-mode and listens for Broadcast Information from the base station 1. When mobile terminal receives Broadcast Information, this is immediately stored on the SIM-card.

When a call from an application on the external computer 3 is made (for instance transmission of a text file from a portable computer 3 to the network 1) an application on the SIM-card is called. This implies that the mobile terminal 2 calls a specific software on the SIM-card with parameters from the application. After that, the SIM-card provides the mobile terminal 2 with information about suitable carrier service. Mobile terminal 2 selects and establishes suitable carrier service towards the network 1. After that, data related to the application is transferred between portable computer 3 and the network 1 by means of selected carrier service.

In the following a possible scenario where the invention might be used is given. Kristoffer is on an official business and wants to utilise his e-mailbox. He starts an e-mail application on his portable computer PC3 and connects it to his mobile terminal 2. Normally it is only to establish a connection by a simple keying in the e-mail application, but this time Kristoffer is in a hurry and selects a higher quality of the intended connection over the GSM-network 1 by an additional selection in the application. Kristoffer has no extensive knowledge of the carrier services. Certainly he has heard about GPRS, but he has no idea of that the application normally uses a "low-performance" so called "best effort"-service over GPRS. Now the application needs to use a carrier service with better performance to provide for Kristoffer's wishes, and normally it would have been sufficient with any other quality profile for GPRS, but just when he is to establish a connection there are a lot of people who want to use GPRS carrier services. This does Kristoffer's mobile terminal 2 know, because it has received information about this in form of short messages (SMS) via GSM's broadcast channel. When Kristoffer finally presses the "set-up connection"-key, his e-mail application transmits a request to the SIM-card which, on basis of the need of the application and the load on the network, selects quite another carrier service, namely HSCSD with 2 time slots. Kristoffer knows nothing about this, but yet he is satisfied because the retrieval of his mail has been rapid.

Finally it can be said that today there are problems of selecting right carrier service for right application.

In a few years the situation will be even more difficult to master, and this invention is a condition for that applications shall have the carrier service which is optimal in each moment.

The above mentioned is only to be regarded as an advantageous embodiment of the invention, and the extent of protection of the invention is only limited by what is stated in the following patent claim.

## Claims

1. Method at a cellular mobile telephone system including at least one network with at least one base station (1) and at least one mobile terminal (2, 3), wherein said base station (1) transmits information to said mobile terminal (2, 3) regarding load in and qualities of said network, and a decision about which carrier service that shall be used for communication between said network and said mobile terminal is made by said mobile terminal (2, 3), **characterised in that** said information is transmitted from said base station (1) to the mobile terminal (2, 3) by means of cell broadcast, **in that** said transmitted information is stored on a memory of said mobile terminal (2, 3), and **in that** said decision is made by said mobile terminal on basis of the stored information.

2. Method according to claim 1, **characterised in that** said information includes information about allocation of resources and loading of said network for the cell where said information has been received.

3. Method according to claims 1 or 2, **characterised in that** said information is stored on a SIM-card of the mobile terminal (2, 3).

4. Method according to any of the previous claims, **characterised in that** software is stored on a SIM-card or on another memory of said mobile terminal (2,3), which software recommends said carrier service on basis of an application and said stored information.

5. Method according claim 4, **characterised in that** said software is specific to the operator, and is downloaded on said SIM-card at the blinding of the card to a person, or via SMS.

6. Method according to claims 4 or 5, **characterised in that** when a user of said mobile terminal (2, 3) starts an application which requires a data connection to said network, a request is made to said software on said SIM-card which recommends a carrier service after which said mobile terminal communicates with said network by means of said recommended carrier service.

7. Method according to any of the previous claims, **characterised in that** said mobile terminal (2,3) comprises a mobile telephone (2) and a portable computer (3) connected to said mobile telephone, said application being started from said portable computer (3).

## Patentansprüche

1. Verfahren bei einem zellularen Mobiltelefonsystem, das wenigstens ein Netz mit wenigstens einer Basisstation (1) und wenigstens einem mobilen Endgerät (2,3) einschließt, wobei die Basisstation (1) Information zu dem mobilen Endgerät (2,3) bezüglich Belastung in dem Netz und Qualitäten des Netzes überträgt und eine Entscheidung darüber, welcher Trägerdienst für die Kommunikation zwischen dem Netz und dem mobilen Endgerät benutzt werden soll, durch das mobile Endgerät (2,3) getroffen wird, **dadurch gekennzeichnet, dass** Information von der Basisstation (1) zu dem mobilen Endgerät (2,3) mit Hilfe von Zellenrundsendung übertragen wird und dass die übertragene Information auf einem Speicher des mobilen Endgerätes (2,3) gespeichert wird und dass die Entscheidung durch das mobile Endgerät aufgrund der gespeicherten Information getroffen wird.

2. Verfahren nach Anspruch 1, **dadurch gekennzeichnet, dass** die Information Information über Zuteilung von Ressourcen und Belastung des Netzes für die Zelle einschließt, wo die Information empfangen worden ist.

3. Verfahren nach Anspruch 1 oder 2, **dadurch gekennzeichnet, dass** die Information auf einer SIM-Karte des mobilen Endgerätes (2,3) gespeichert wird.

4. Verfahren nach einem der vorangehenden Ansprüche, **dadurch gekennzeichnet, dass** Software auf einer SIM-Karte oder auf einem anderen Speicher des mobilen Endgeräts (2,3) gespeichert wird, welche Software den Trägerdienst aufgrund einer Anwendung und der gespeicherten Information empfiehlt.

5. Verfahren nach Anspruch 4, **dadurch gekennzeichnet, dass** die Software spezifisch für den Betreiber ist und auf die SIM-Karte bei der Bindung der Karte mit einer Person oder über SMS heruntergeladen wird.

6. Verfahren nach Ansprüchen 4 oder 5, **dadurch gekennzeichnet, dass,** wenn ein Benutzer des mobilen Endgerätes (2,3) eine Anwendung startet, die eine Datenverbindung zu dem Netz erfordert, eine Anforderung an die Software auf der SIM-Karte gemacht wird, die einen Trägerdienst empfiehlt, wonach dann das mobile Endgerät mit dem Netz mit Hilfe des empfohlenen Trägerdienstes kommuniziert.

7. Verfahren nach einem der vorangehenden Ansprüche, **dadurch gekennzeichnet, dass** das mobile Endgerät (2,3) ein Mobiltelefon (2) und einen tragbaren Computer (3) aufweist, der mit dem Mobiltelefon verbunden ist, welche Anwendung von dem tragbaren Computer (3) gestartet wird.

## Revendications

1. Procédé, sur un système de téléphone mobile cellulaire comportant au moins un réseau avec au moins une station de base (1) et au moins un terminal mobile (2, 3), dans lequel ladite station de base (1) transmet des informations audit terminal mobile (2, 3) se rapportant à la charge et au niveau de qualité dudit réseau, et une décision concernant la porteuse de service qui doit être utilisée afin d'assurer la communication entre ledit réseau et ledit terminal mobile est prise par ledit terminal mobile (2, 3), **caractérisé en ce que** lesdites informations sont transmises à partir de ladite station de base (1) vers le terminal mobile (2, 3) au moyen d'une diffusion cellulaire, **en ce que** lesdites informations transmises sont mémorisées dans une mémoire dudit terminal mobile (2, 3), et **en ce que** ladite décision est prise par ledit terminal mobile sur la base desdites informations mémorisées.

2. Procédé selon la revendication 1, **caractérisé en ce que** lesdites informations comportent des informations concernant l'affectation de ressources et la charge dudit réseau pour la cellule dans laquelle lesdites informations ont été reçue.

3. Procédé selon les revendications 1 ou 2, **caractérisé en ce que** lesdites informations sont mémorisées sur une carte SIM du terminal mobile (2, 3).

4. Procédé selon l'une quelconque des revendications précédentes, **caractérisé en ce qu'**un logiciel est mémorisé sur une carte SIM ou sur une autre mémoire dudit terminal mobile (2, 3), lequel logiciel recommande ladite porteuse de service sur la base d'une application et desdites informations mémorisées.

5. Procédé selon la revendication 4, **caractérisé en ce que** ledit logiciel est spécifique à l'opérateur, et est téléchargé sur ladite carte SIM lors de l'attribution de la carte à une personne, ou par l'intermédiaire d'un SMS,

6. Procédé selon les revendications 4 ou 5, **caractérisé en ce que**, lorsqu'un utilisateur dudit terminal mobile (2, 3) démarre une application qui nécessite une connexion numérique audit réseau, une requête est faite audit logiciel sur ladite carte SIM qui recommande une porteuse de service après quoi ledit terminal mobile communique avec ledit réseau au moyen de ladite porteuse de service recommandée.

7. Procédé selon l'une quelconque des revendications précédentes, **caractérisé en ce que** ledit terminal mobile (2, 3) comprend un téléphone mobile (2) et un ordinateur portable (3) raccordé audit téléphone mobile, ladite application étant démarrée à partir dudit ordinateur portable (3).
